(19) Europäisches Patentamt
European Patent Office
Office européen des brevets

(11) Veröffentlichungsnummer: **0 179 755**
**A2**

(12) # EUROPÄISCHE PATENTANMELDUNG

(21) Anmeldenummer: **85890261.2**

(22) Anmeldetag: **21.10.85**

(51) Int. Cl.[4]: **B 29 C 47/00**
B 29 C 45/00, B 29 C 47/10
B 29 C 45/18
//B29K105:24

(30) Priorität: **22.10.84 AT 3364/84**

(43) Veröffentlichungstag der Anmeldung:
**30.04.86 Patentblatt 86/18**

(84) Benannte Vertragsstaaten:
**AT BE CH DE FR GB IT LI LU NL SE**

(71) Anmelder: **Rosendahl Maschinen Gesellschaft m.b.H.**
**Südstadtzentrum 2**
**A-2246 Maria Enzersdorf-Südstadt(AT)**

(72) Erfinder: **Kerschbaum, Kurt**
**Kollersteig 15**
**A-3400 Klosterneuburg(AT)**

(72) Erfinder: **Konvicka, Alfred**
**Glasergasse 14/17**
**A-1090 Wien(AT)**

(74) Vertreter: **Gibler, Ferdinand, Dipl.Ing.Dr.tech.**
**Dorotheergasse 7/14**
**A-1010 Wien(AT)**

(54) **Verfahren und Vorrichtung zur Herstellung eines vernetzten extrudierten bzw. gespritzten Produktes.**

(57) Verfahren zur Herstellung eines vernetzten extrudierten bzw. gespritzten Produktes aus einem mit Hilfe eines hydrolysierbaren, ungesättigten Silans, eines Freiradikalbildners und eines Silanolkondensationskatalysators vernetzbaren Polymeren durch Vermischen der genannten Compoundiermittel mit dem Polymeren unter Erhöhung der Temperatur auf Pfropftemperatur, Förderung der vermischten Masse zu einem Hohlraum zur Formung eines Produkts sowie Vernetzung der gepfropften Masse im geformten Produkt durch Einwirkung von Feuchtigkeit, wobei die Vermischung der Compoundiermittel mit dem Polymeren unter Überfuhrung der eingesetzten in Plastifizierung begriffenen Komponenten von einem sich in Förderrichtung der Komponenten im Querschnitt verkleinernden Raum in einen mit diesem über einen Spalt verbunden, sich in Förderrichtung der Komponenten in Querschnitt vergrößernden Raum, wobei sich die Summe der Querschnitt beider Räume über den Förderweg vermindern, Bildung eines Stranges aus den vorvermischten plastifizierten Komponenten und Zerteilen dieses Stranges in eine Vielzahl von Strängen und anschließendes Vereinigen dieser Stränge erfolgt, wonach die so vermischte Masse dem Formenhohlraum zugeführt wird, wobei im wesentlichen in jenem Teil des Förderwegs, in dem der Strang in eine Vielzahl von Strängen aufgeteilt und diese wieder vereinigt werden die vermischte Masse der Pfropftemperatur ausgesetzt wird.

EP 0 179 755 A2

Croydon Printing Company Ltd

# Verfahren und Vorrichtung zur Herstellung eines vernetzten extrudierten bzw. gespritzten Produktes

Die Erfindung bezieht sich auf ein Verfahren zur Herstellung eines vernetzten extrudierten bzw. gespritzen Produktes aus einem mit Hilfe eines hydrolysierbaren, ungesättigten Silans, eines Freiradikalbildners und eines Silanolkondensationskatalysators vernetzbaren Polymeren durch Vermischen der genannten Compoundiermittel mit dem Polymeren unter Erhöhung der Temperatur auf Pfropftemperatur, Förderung der vermischten Masse zu einem Hohlraum zur Formung eines Produkte

sowie Vernetzung der gepfropften Masse im geformten Produkt durch Einwirkung von Feuchtigkeit.

Es ist seit langem bekannt, die Eigenschaften von Polyethylen und anderen Olefinpolymeren durch Erhitzen derselben in Gegenwart organischer Peroxide als Vernetzungsmittel zu verändern. Dieses Verfahren hat jedoch den Nachteil, eine besonders sorgfältige Kontrolle zu erfordern, um eine vorzeitige oder zu starke Verknüpfung der Polymermoleküle und somit ein Festwerden der Polymermasse in der Vorrichtung zu verhindern. Auch neigen die Gegenstände aus derart modifizierten Polymeren manchmal zu nachträglichen Formveränderungen.

Es wurde daher ein besser kontrollier- und einstellbares Verfahren zur Vernetzung von Olefinpolymeren entwickelt, das darin besteht, auf das Polymer eine Organosilanverbindung, die zumindest eine siliciumgebundene hydrolysierbare Gruppe und eine mit freiradikalischen Stellen reaktionsfähige Gruppe enthält, aufzupfropfen und anschließend durch Feuchtigkeitseinfluß eine Vernetzung über die Silangruppierung zu bewirken.

Dieses Verfahren ist als Sioplas-Verfahren in die Literatur eingegangen (vgl. Wire Journal, Mai 1977, S.88-92 "Crosslinked polyethylene Insulations using the Sioplas technology").

Zur Durchführung dieses Verfahrens gibt es mehrere Vorschläge:
In der GB-PS 1 234 034 (Midland Silicones) erfolgt die Pfropfung durch mechanische Bearbeitung der Mischung, bei welcher sich freiradikalische Stellen an dem Polymer bilden, an denen sich die Silanverbindung ansetzen kann.

In der GB-PS 1 286 460 (Dow Corning) ist der Zusatz von Verbindungen beschrieben, die freie Radikale bilden, wobei solche Verbindungen eingesetzt werden, die eine Halbwertszeit von weniger als 6 min. bei Raktionstemperatur haben. Als Reaktionstemperatur wird hier eine Temperatur von etwa 140°C vorgeschlagen. Die Freiradikalbildner dieser Art sind organische Peroxide und Perester, wie beispielsweise Benzoylperoxid, Dicumylperoxid, Azoverbindungen u.a.m.

Diese Verfahrensführung ist auch auf bestimmte vernetzte und vernetzbare Copolyere von Ethylen und Alkylacrylaten anwendbar. Die GB-PS 1 396 120 (Dow Corning) beschreibt ein derartiges Verfahren im Detail.

Im Zuge weiterer Forschungen auf diesem Gebiet zeigte sich, daß unter bestimmten Umständen die erste Stufe des genannten Verfahrens insofern kritisch war, als der Schmelzindex des in Gegenwart von Peroxiden und Perestern mit der Silanverbindung gepfropften Polymeren im Verhältnis zum Ausgangspolymeren deutlich herabgesetzt wurde. Wenn nun das Ausgangsmaterial bereits einen relativ niedrigen Schmelzindex hatte, so konnte es vorkommen, daß sich bei der anschließenden Formgebung durch den noch weiter herabgesetzten Schmelzindex Probleme ergaben. Die Auswahl ganz spezieller Freiradikalbildner zur Durchführung des Verfahrens in einem derartigen Fall konnte diese Schwierigkeit verhindern. Als geeignete Freiradikalbildner erwiesen sich Verbindungen der allgemeinen Formel

$$R''\overset{\overset{O}{\|}}{C}OOR'''$$

in der R" einen sekundären oder tertiären Alkylrest, einen

Cycloalkylrest mit mehr als 4 Kohlenstoffatomen oder einen Benzylrest und R'" einen tertiären Alkylrest oder einen Cumylrest bedeuten. Auch hier wird die Reaktion wieder bei einer Temperatur durchgeführt, bei der der Freiradikalbildner eine Halbwertszeit von unter 6 min. hat. Dieses Verfahren ist in der GB-PS 1 450 934 (Dow Corning) und in der auf dieser beruhenden FR-PS 2 217 362 (Dow Corning) beschrieben.

Grundsätzlich wird dabei zur Mischung und Pfropfung entweder mit Kaskadenextrudern, wie gemäß der AT-PS 362 569 (BICC) oder der DE-OS 2 636 709 (Gutehoffnungshütte) oder mit einem sehr langen Einschneckenextruder gemäß AT-PS 345 554 (BICC-Maillefer) gearbeitet.

Der Weg über den Kaskadenextruder ist sehr aufwendig und mit hohen Investitionen verbunden, wodurch die Rentabilität zwar nicht in Frage gestellt wird, die Abschreibung einer solchen Anlage jedoch über einen längeren Zeitraum erfolgen muß.

Weitaus interessanter ist das Verfahren über den Einschneckenextruder.

Wie erwähnt, ist ein derartiges Verfahren in der AT-PS 345 554 beschrieben. In dieser PS wird vorgeschlagen, zur Herstellung eines vernetzten extrudierten Produkts aus einem mit Hilfe eines hydrolysierbaren und ungesättigten Silan-Compoundiermittels pfropf- und vernetzbaren Polymeren das Polymere und die gesamten Compoundiermittel im gleichen Zylinder einer Schneckenspritzmaschine zu vermischen, wobei die Schneckenspritzmaschine aufeinanderfolgend eine Vormischzone, eine Homogenisierzone sowie eine Dosierzone aufweist.

Dabei soll, wie sich aus einem Hinweis auf die GB-PS 964 428 ergibt, die Homogenisierzone entweder durch eine sich gegen den Spritzkopf zu vermindernde Steigung aufweisende Schnecke, wobei der Grund der zwischen dem Steg verbleibenden Nut im Bereich der zweiten Hälfte der Homogenisierzone mit zu einem zentralen Kanal der Schnecke führenden Bohrungen versehen ist, der zu dem dem Spritzkopf zugekehrten Ende der Schnecke führt, oder durch eine zweigängigen Schnecke gebildet ist, wobei die beiden Gänge eine unterschiedliche Steigung aufweisen, sodaß die beiden Gänge am Beginn und am Ende der Homogenisierungszone ineinander übergehen. Dabei wird das aufgeschmolzene Material von der einen Spiralnut in die andere Spiralnut über den zwischen den Stegen der Schnecke und dem diese umgebenden Zylinder übergeführt. Praktisch wirken die eine unterschiedliche Steigung aufweisenden Stege der Schnecke als dynamischer Mischer. Allerdings sind solche Schnecken nur mit sehr großen Aufwand herzustellen.

Ziel der Erfindung ist es ein Verfahren der eingangs erwähnten Art vorzuschlagen, daß sich in der Praxis mit relativ einfachen und unkomplizierten Einrichtungen durchführen läßt.

Erfindungsgemäß wird dies dadurch erreicht, daß die Vermischung der Compoundiermittel mit dem Polymeren unter Überführung der eingesetzten in Plastifizierung begriffenen Komponenten von einem sich in Förderrichtung der Komponenten im Querschnitt verkleinernden Raum in einen mit diesem über einen Spalt verbunden, sich in Förderrichtung der Komponenten im Querschnitt vergrößernden Raum, wobei sich die Summe der Querschnitte beider Räume über den Förderweg vermindert, Bildung eines Stranges aus den vorvermischten plastifizierten Komponenten und Zerteilen dieses Stranges in eine Vielzahl von Strängen und anschließendes Vereinigen

dieser Stränge erfolgt, wonach die so vermischte Masse dem Formenhohlraum zugeführt wird, wobei im wesentlichen in jenem Teil des Förderwegs, in dem der Strang in eine Vielzahl von Strängen aufgeteilt und diese wieder vereinigt werden die vermischte Masse der Pfropftemperatur ausgesetzt wird. Auf diese Weise wird eine sehr innige Vermischung der eingesetzten Komponenten zu einer sehr homogenen Masse sichergestellt, wobei, da die Masse erst knapp bevor sie in einen Formenhohlraum eingebracht wird, also zu einem Zeitpunkt der Pfropftemperatur ausgesetzt wird, zu dem die Komponenten bereits innig miteinander vermischt sind, sehr günstige Voraussetzungen für die gute Vernetzung gegeben sind, ohne daß sich Schwierigkeiten bei der Verarbeitung in einem Extruder od.dgl. ergeben. Dabei kann das Verfahren mit einer relativ einfachen Einrichtung durchgeführt werden.

Ein weiteres Ziel der Erfindung ist es eine Vorrichtung zur Durchführung des erfindungsgemäßen Verfahrens vorzuschlagen, die sich durch besondere Einfachheit auszeichnet.

Erfindungsgemäß wird bei einer Vorrichtung mit einer in einen gegebenenfalls beheizbaren Zylinder führenden Dosiereinrichtung, einer in diesem drehbar angeordneten Schnecke und einem daran anschließenden zu einem Formenhohlraum führenden Kanal daher vorgeschlagen, daß in dem zu einem Formenhohlraum führenden Kanal ein an sich bekannter statischer Mischer angeordnet ist, wobei die Schnecke als eine zweigängige Schnecke ausgebildet ist, deren eine Spiralnut über die Länge der Schnecke gegen den Kanal zu einen auf Null abnehmenden Querschnitt und deren andere Spiralnut einen über deren Länge in dieser Richtung von Null aus zunehmenden Querschnitt aufweist und die Summe der Querschnitte beider Spiralnuten gegen den Kanal zu abnimmt und beide Spiralnuten die gleiche Steigung aufweisen.

Eine solche Schnecke läßt sich relativ leicht herstellen. Auch ein statischer Mischer weist einen sehr einfachen Aufbau auf und besteht im wesentlichen aus den Strang teilenden und wieder zusammenführenden Leiteinrichtungen.
Ein solcher Mischer kann z.B. einen Aufbau aufweisen wie er in der Zeitschrift "Plast-Verarbeiter" 34.Jahrgang, 5/1983 Seite 423-426 beschrieben ist.

Die wirksame Länge des Mischers hängt vom gewünschten Materialdurchsatz ab. Es ist dabei möglich, mehrere solche Mischelemente hintereinander zu schalten. Der Mischer wird auf Pfropftemperatur, meist einer Temperatur von etwa 230°C gehalten.

Zur Homogenisierung der Schmelze sind auch Anordnungen wie der Sulzer-Mischkopf SMK-X geeignet (vgl.Synthetic Nr.11/1983 bzw. Firmenschriften vom April 1983 und Juni 1984). Mischköpfe dieser Art sind direkt in die Düse von Spritzgießmaschinen eingebaut und enthalten mehrere, meist 4-6 Mischelemente, die ebenfalls zum Abbau von Inhomonitäten dienen.

Eine günstige Anordnung hat auch der Keenics-Mischer, der in diesem Zusammenhang mit Erfolgt eingesetzt wird.

Dem statischen Mischer ist z.B. ein Spritzkopf mit Formwerkzeug nachgeschaltet. Der Kopf wird ebenfalls auf einer Temperatur von etwa 230°C gehalten.

Die angegebenen Temperaturen im Extruder und im statischen Mischer können selbstverständlich je nach Zusammensetzung der Ausgangskomponenten angepaßt und variiert werden.

Die auf diese Weise gewonnene gepfropfte Schmelze weist einen hohen Grad an Homogenität auf und garantiert eine sehr

gleichmäßige Vernetzung. Insbesondere im Bereich der Isolationen, vor allem bei Kabelisolationen mit Mittel- und Hochspannungsbereich kommt diese Eigenschaft zum Tragen.

Mit dem erfindungsgemäßen Aufbau ist es auch möglich mit Schnecken von üblicher Länge das Auslangen zu finden. So ist es z.B. möglich mit einer 20 D-Schnecke Kunststoffmaterial und die Silanverbindung z.B. Vinyltrimethonoxysilan (VTMOS) zu verarbeiten. Dabei können über die Länge der Schnecke folgende Temperaturen angewandt werden.

| | | |
|---|---|---|
| Zone 1 | 130°C | 5xD |
| Zone 2 | 190°C | 5XD |
| Zone 3 | 190°C | 5XD |
| Zone 4 | 230°C | 5XD |

wobei sich die Zone 1 im Bereich des Aufgabenendes und sich die Zone 4 am spritzkopfseitigen Ende der Schnecke befindet.

Dabei wird das aufgeschmolzene und zu einer homogenen Masse vermischten Polymere dem statischen Mischer zugeführt, in dem die Mase auf der Pfropftemperatur von z.B. 230°C gehalten wird, wobei die Masse im statischen Mischer thermisch homogenisiert wird und dort die Pfropfreaktion stattfindet.

Nach einem weiteren Merkmal der Erfindung kann vorgesehen sein, daß die eine Spiralnut eine gleichbleibende Breite jedoch eine gegen den Kanal bzw. den statischen Mischer (B) zu abnehmende Tiefe aufweist und die andere nach einer Zuführzone für das Granulat beginnende Spiralnut eine gleichbleibende Tiefe und eine gegen den statischen Mischer zu sich vergrößernde Breite aufweist. Dadurch ergibt sich eine sehr einfach Konstruktion für die Schnecke, die relativ einfach herstellbar ist.

Dabei ist es besonders vorteilhaft, wenn die Projektion des Nutgrundes der einen Spiralnut einem Abschnitt einer archimedischen Spirale entspricht, wodurch sich eine gleichmäßige Abnahme der Querschnittes dieser Nut ergibt.

Grundsätzlich ist aber zu bemerken, daß das erfindungsgemäße Verfahren nicht an die oben beschriebene Einrichtung gebunden ist. So kann das erfindungsgemäße Verfahren auch z.B. mit Extrudern durchgeführt werden, die eine der in der Fachwelt als Maddock-Mischzone, Troester-Mischzone, oder eine Bamag-Hartig-Mischzone aufweisen, wobei auf Anordnungen mit mehreren hintereinander angeordneten Schnecken verzichtet werden kann. Weiters kann das erfindungsgemäße Verfahren auch mit Vorteil auf einem Extruder der Baureihe RE der Fa. Rosendahl Ges.m.b.H., Maria Enzersdorf, Österreich, durchgeführt werden, dem ein statischer Mischer nachgeschaltet ist.

Für das erfindungsgemäße Verfahren können z.B. Formulierungen verwendet werden, die im wesentlichen mit denjenigen ident sind, die in den GB-PSen 1 450 934, 1 396 120, 1 234 034 und 1 286 460 aufgezeigt sind.

Grundsätzlich wurden folgende Komponenten als vorteilhaft befunden:

1. Mischung von Silan VTMOS, Dicumylperoxid und Dibutylzinndilaurat, die im Handel erhältlich ist (I). (z.B. VS 401-C der Fa. UNION-CARBIDE, Versoix-Genf).

2. Ein Polyethylen-Copolymerisat mit 3% VA mit einer Dichte von 0,975 und einem MFI 2,5 rußgefüllt und einer für die Silanvernetzung geeigneten Stabilisierung (II). (z.B. Lupolen V 2512 JX schwarz 92157 der BASF Ludwigshafen).

3. Als Variante zu 2 ein Polyethylen mit einer Dichte von 0,920 und einem MFI 0,2 sowie einer für die Silanvernetzung angepaßten Stabilisierung (III). (z.B. DFDM 5951 der Fa.BP Chemical, Genf).

Die Formulierung ist wie folgt:

A. 100 Teile Produkt II
   1,5 Teile Produkt I
B. 100 Teile Produkt III
   1,5 Teile Produkt I

Ein spezieller Mischer oder ein Spezialdosiergerät sind in diesem Fall nicht notwendig. Es genügt, in einem Trockner z.B. einem Granulattrockner der Firma Cramer Apparatebau, Kierspe/BRD dem Granulat seine eventuell zu hohe Restfeuchtigkeit zu entziehen und mit einem Fördergerät dieses Granulat in den Trichter des Extruders zu fördern.

Die Flüssigkeitskomponente wird in einer Dosierstation z.B. der Firma SWISSCAB, Yvonand, Schweiz, in den unteren Teil des Trichters synchron zur Schneckendrehzahl eindosiert.

In der angeschlossenen Zeichnung ist die Anlage zur Durchführung des erfindungsgemäßen Verfahrens in einer bevorzugten Ausführungsform näher dargestellt:

Wie aus dieser schematischen zeichnung ersichtlich, gelangt das Kunststoffgranulat über die Trockenzellen T und den Granulattrockner G in Pfeilrichtung in den Aufnahmetrichter des Extruders E. Ebenfalls dorthin wird die Flüssigkeitskomponente F über die Dosierpumpe D zugeführt. Im Extruder

E, der im Teil A den Schneckenteil betont herausgezeichnet zeigt, wird die Masse gemischt. Die Motore M dienen zum Antrieb von Extruder bzw. Dosierpumpe. Anschließend an den Extruderteil A folgt der statische Mischer B, in dem hauptsächlich der Pfropfvorgang vor sich geht. Die Spritzeinrichtung ist mit S bezeichnet.

In den folgenden Beispielen sind Zusammensetzungen und erzielte Ergebnisse angegeben. In allen Fällen wird mit einem Standard-Extruder der Fa.Rosendahl und einem Sulzer-Mischer gearbeitet.

Beispiel 1

Formulierung gemäß A

Beispiel 2

Formulierung gemäß A, jedoch mit 1,8 Teilen Produkt I

Beispiel 3

Formulierung gemäß B

Beispiel 4

Formulierung gemäß B, jedoch mit 1,8 Teilen Produkt I

Die mit den Formulierungen dieser Beispiele erzielten Werte sind in der folgenden Tabelle aufgeführt:

| Beispiel | 1 | 2 | 3 | 4 |
|---|---|---|---|---|
| Gel-Gehalt % | 75 | 79 | 76 | 78 |
| Zugfestigkeit MPa | 16 | 18 | 15 | 19 |
| Bruchdrehung % | 260 | 290 | 250 | 280 |
| Hot Set bei 200°, 15 min und 20 N/cm² % | 90 | 50 | 95 | 60 |

Wie aus den Beispielen 1 bis 4 und der angeschlossenen Tabelle ersichtlich ist, erreicht man mit einem statischen Mischer, der einem handelsüblichen Standardextruder nachgehaltet wurde, überraschenderweise eine absolut korrekte Pfropfqualität. Zur Vernetzung des Kunststoffmaterials wurde in heißem Wasser bei 90°C ca. 6 Stunden lang nachbehandelt.

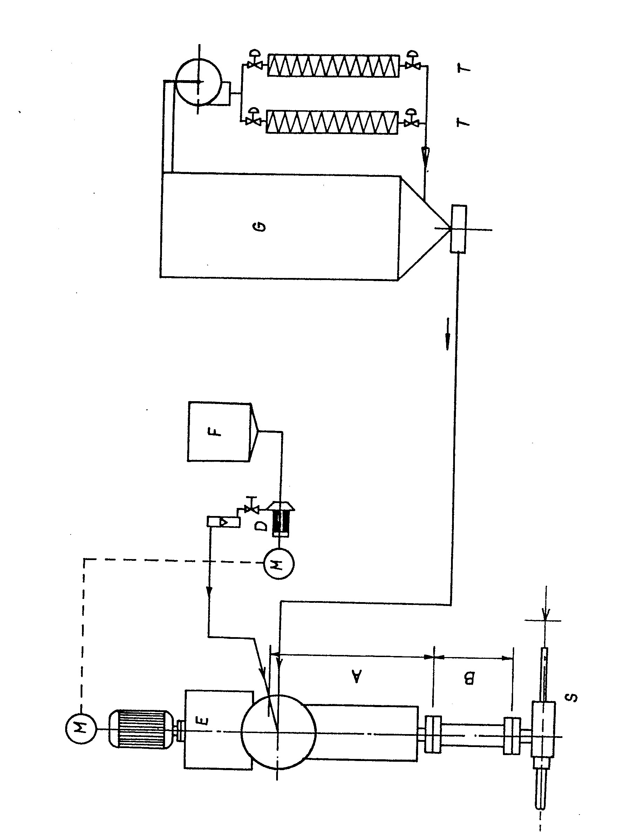

Patentansprüche:

1. Verfahren zur Herstellung eines vernetzten extrudierten bzw. gespritzen Porduktes aus einem mit Hilfe eines hydrolysierbaren, ungesättigten Silans, eines Freiradikalbildners und eines Silanolkondensationskatalysators vernetzbaren Polymeren durch Vermischen der genannten Compoundiermittel mit dem Polymeren unter Erhöhung der Temperatur auf Pfropftemperatur, Förderung der vermischten Masse zu einem Hohlraum zur Formung eines Produkts sowie Vernetzung der gepfropften Masse im geformten Produkt durch Einwirkung von Feuchtigkeit,
dadurch gekennzeichnet,
daß die Vermischung der Compoundiermittel mit dem Polymeren

unter Überführung der eingesetzten in Plastifizierung begriffenen Komponenten von einem sich in Förderrichtung der Komponenten im Querschnitt verkleinernden Raum in einen mit diesem über einen Spalt verbunden, sich in Förderrichtung der Komponenten in Querschnitt vergrößernden Raum, wobei sich die Summe der Querschnitt beider Räume über den Förderweg vermindern, Bildung eines Stranges aus den vorvermischten plastifizierten Komponenten und Zerteilen dieses Stranges in eine Vielzahl von Strängen und anschließendes Vereinigen dieser Stränge erfolgt, wonach die so vermischte Masse dem Formenhohlraum zugeführt wird, wobei im wesentlichen in jenem Teil des Förderwegs, in dem der Strang in eine Vielzahl von Strängen aufgeteilt und diese wieder vereinigt werden die vermischte Masse der Pfropftemperatur ausgesetzt wird.

2. Vorrichtung zur Durchführung des Verfahrens nach Anspruch 1 mit einer in eine gegebenenfalls beheizbaren Zylinder, führenden Dosiereinrichtung, einer in dessen drehbar angeordneten Schnecke und einem daran anschließenden zu einem Formenhohlraum führenden Kanal, dadurch gekennzeichnet, daß in dem zur einem Formenhohlraum führenden Kanal ein an sich bekannter statischer Mischer (B) angeordnet ist, wobei die Schnecke als eine zweigängige Schnecke ausgebildet ist, deren eine Spiralnut über die Länge der Schnecke gegen den Kanal zu einen auf Null abnehmenden Querschnitt und deren andere Spiralnut einen über deren Länge in dieser Richtung von Null aus zunehmenden Querschnitt aufweist und die Summe der Querschnitte beider Spiralnuten gegen den Kanal zu abnimmt und beide Spiralnuten die gleiche Steigung aufweisen.

3. Vorrichtung nach Anspruch 2, dadurch gekennzeichnet, daß die eine Spiralnut eine gleichbleibende Breite jedoch eine gegen den Kanal bzw. den statischen Mischer (B) zu abnehmende Tiefe aufweist und die andere nach einer Zuführzone für das Granulat beginnende Spiralnut eine gleichbleibende Tiefe und eine gegen den statischen Mischer (B) zu sich vergrößernde Breite aufweist.

4. Vorrichtung nach Anspruch 3, dadurch gekennzeichnet, daß die Projektion des Nutgrundes der einen Spiralnut einem Abschnitt einer archimedischen Spirale entspricht.

1/1

0179755